(19) **Europäisches Patentamt**
**European Patent Office**
**Office européen des brevets**

(11) **EP 2 345 554 B1**

(12) **FASCICULE DE BREVET EUROPEEN**

(45) Date de publication et mention
de la délivrance du brevet:
**12.06.2019 Bulletin 2019/24**

(51) Int Cl.:
**B60L 5/42** *(2006.01)* **B60L 11/18** *(2006.01)*
**A63H 18/12** *(2006.01)*

(21) Numéro de dépôt: **10195379.2**

(22) Date de dépôt: **16.12.2010**

(54) **Dispositif de recharge en énergie pour un équipement de stockage d'énergie embarqué à bord d'un véhicule**

Energieaufladevorrichtung für ein Energiespeichergerät an Bord eines Fahrzeugs

Power-recharging device for an item of power-storage equipment on board a vehicle

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2009 FR 0959048**
**22.10.2010 FR 1058671**

(43) Date de publication de la demande:
**20.07.2011 Bulletin 2011/29**

(73) Titulaire: **ALSTOM Transport Technologies**
**93400 Saint-Ouen (FR)**

(72) Inventeurs:
• **Chantal, Olivier**
**78260, ACHERES (FR)**
• **Moskovitz, Jean-Paul**
**75012 PARIS (FR)**

• **Porcher, Frédéric**
**65310, HORGUES (FR)**
• **Iliozer, Marc**
**69680, CHASSIEU (FR)**
• **Hourtne, Jean-Luc**
**13320, BOUC BEL AIR (FR)**
• **Caron, Jean-Paul**
**77400, St THIBAULT DES VIGNES (FR)**

(74) Mandataire: **Lavoix**
**2, place d'Estienne d'Orves**
**75441 Paris Cedex 09 (FR)**

(56) Documents cités:
**EP-A1- 1 419 925 EP-A1- 2 014 505**
**DE-A1- 4 336 705 FR-A1- 2 910 391**
**US-A- 4 139 071**

**Description**

La présente invention concerne un dispositif de recharge en énergie électrique pour un équipement de stockage d'énergie embarqué à bord d'un véhicule, le dispositif comprenant au moins un dispositif d'alimentation en énergie extérieur au véhicule et au moins un collecteur d'énergie apte à être fixé sur le véhicule, le dispositif d'alimentation en énergie et le collecteur d'énergie présentant chacun une surface apte à être mise en contact l'une avec l'autre afin de permettre un transfert d'énergie entre elles.

De tels dispositifs de recharge sont utilisés notamment pour des véhicules électriques de transport en commun urbain comme des tramways ou des trolley-bus, qui sont autonomes en énergie sur tout ou partie de leur parcours. En effet, de plus en plus d'opérateurs de ces lignes ne souhaitent pas de caténaires aériennes dans leur centre ville, qui dégradent l'esthétisme des quartiers.

Il est ainsi connu de la demande de brevet FR 2 910 391 un système de captage d'énergie électrique utilisé pour la recharge en énergie de réserves d'énergie électrique embarquées sur des véhicules de transport urbain. Ce système comprend des poteaux distributeurs d'énergie, munis de branches flexibles, et des rails de captage électriquement conducteurs formant des pistes de captage, disposés sur la structure de toit d'un véhicule. Ce système présente l'inconvénient de nécessiter de nombreux poteaux, car leur espacement doit être inférieur à la longueur des rails de captage, donc à la longueur d'un véhicule. En d'autres mots, les pistes de captage d'un véhicule doivent toujours être en contact avec une branche d'un poteau distributeur.

Il est également connu de la demande de brevet FR 2 794 695 un dispositif de recharge pour un véhicule électrique tel qu'un kart constitué de deux parties complémentaires du type mâle/femelle. La première partie est fixée au sol et comprend une pièce conductrice d'électricité, et la seconde est un patin fixé au véhicule. Ce dispositif a pour inconvénient de nécessiter des parties de forme spéciale adaptée à l'autre et de nécessiter un dispositif de guidage pour centrer précisément le patin sur la pièce conductrice d'électricité.

Par ailleurs, la recharge en station s'effectue lorsque le véhicule est à l'arrêt, pendant une durée au plus égale à celle prévue pour la montée et la descente des voyageurs, typiquement entre 15 et 30 secondes. Cette durée doit être la plus courte possible afin de ne pas accroître inutilement la durée de trajet du véhicule.

Recharger un dispositif de stockage d'énergie électrique, tel qu'une batterie ou un ensemble de super condensateurs présentant à l'heure actuelle une puissance d'environ quelques centaines de kW compte-tenu des limitations d'encombrement imposées par le véhicule, en un temps court n'excédant pas 30 secondes, nécessite de disposer d'un dispositif de recharge permettant l'échange d'une telle puissance sans détérioration des parties constitutives du dispositif ni risque pour les usagers.

Or les collecteurs d'énergie de l'art antérieur sont conçus pour collecter l'énergie en contact glissant. En effet, le carbone des pistes d'un pantographe ou l'acier d'un frotteur sont utilisés pour leurs propriétés de résistance à l'usure et de conduction d'électricité. Cependant, ni le carbone ni l'acier ne sont assez bons conducteurs électriques pour supporter sur un temps de plusieurs secondes un transfert de courant de plusieurs milliers d'Ampères sans s'échauffer à des températures amenant en général à leur destruction : le contact glissant est donc nécessaire pour éviter la surchauffe des matériaux en contact.

Il a ainsi été mis en évidence, lors d'essais dans lesquels un frotteur en acier est mis en contact statique pendant 30 s avec un rail de recharge alimenté en 1500 A et 750 V que le transfert d'énergie ne s'effectue que par quelques points de la surface de contact du frotteur, à une température supérieure à 500°C telle que le transfert d'énergie entraîne des points de soudure entre le frotteur et le rail de recharge. Appliquer une pression sur le frotteur allant jusqu'à 6 kN ne permet pas d'améliorer le contact entre le frotteur et le rail de recharge, le transfert d'énergie s'effectuant également par quelques points seulement, entraînant une élévation de température entraînant la soudure du frotteur au rail.

US 4 139 071 décrit un autre type de dispositif de recharge d'énergie, similaire au préambule de la revendication 1.

Le but de la présente invention vise un dispositif de recharge en énergie électrique permettant la recharge d'équipements de stockage d'énergie embarqués à bord d'un véhicule sans présenter les inconvénients des dispositifs de l'art antérieur et sans induire d'échauffements qui entraînent la détérioration voire la destruction des composants le constituant. Il vise, plus spécifiquement, à améliorer les transferts d'énergie lors de la recharge à l'arrêt du véhicule.

L'invention a pour objet un dispositif de recharge en énergie pour un équipement de stockage d'énergie embarqué à bord d'un véhicule, comprenant au moins un dispositif d'alimentation en énergie extérieur au véhicule, au moins un collecteur d'énergie apte à être fixé sur le véhicule, le dispositif d'alimentation en énergie et le collecteur d'énergie présentant chacun au moins une surface apte à être mise en contact l'une avec l'autre. Au moins un matériau conducteur souple est interposé entre les deux surfaces pour former un contact surfacique permettant le transfert d'énergie entre le collecteur d'énergie et le dispositif d'alimentation en énergie par la surface dudit matériau conducteur souple.

On comprend ici par matériau conducteur souple un matériau apte à se conformer à différentes formes de surfaces sur lesquelles il est fixé, et présentant une épaisseur suffisante pour lui conférer une certaine flexibilité et une certaine compressibilité. On vise, par exemple, les matériaux fibreux , mais on peut aussi envisager des mousses. La nature métallique du matériau lui confère la conductivité électrique appropriée, bien qu'il ne soit pas exclu que le matériau en question comporte ou soit fait de fibres conductrices mais non métalliques ou non entièrement métalliques, ou soit constitué d'un matériau non fibreux et non métallique.

Le matériau, s'il est fibreux, peut être non tissé. De préférence, il s'agit d'au moins une tresse métallique, par exemple de type tresse de blindage (généralement assez fine et utilisée pour gainer des câblages électriques afin d'en assurer le blindage électromagnétique), ou de type tresse de retour de courant (généralement de dimensions plus importantes).

Ce type de matériau s'est avéré excellent à transférer de l'énergie (électrique mais aussi thermique) d'une surface de contact à l'autre, car il répartit le transfert d'énergie sur toute sa surface (ou l'essentiel de celle-ci), ce qui diminue d'autant la formation de points chauds et le risque d'élévation de température au-delà de la température de dégradation d'au moins certains des composants du dispositif, tout particulièrement en mode d'alimentation statique. En outre, sur le plan mécanique, ce type de matériau, étant conformable, peut donc s'adapter aisément à toute forme de support, à toute configuration. En étant au moins un peu compressible dans son épaisseur, il est capable, en outre, d'absorber une certaine tolérance dans le positionnement relatif entre le dispositif d'alimentation en énergie et le collecteur d'énergie.

Dans une première configuration, tout ou partie du matériau conducteur souple est solidarisé au dispositif d'alimentation en énergie.

Dans une autre configuration, tout ou partie du matériau conducteur souple est solidarisé au collecteur d'énergie. A noter que ces deux configurations peuvent être alternatives ou cumulatives.

L'invention porte également sur le dispositif d'alimentation en énergie seul et sur le collecteur d'énergie seul, quand ceux-ci sont munis du matériau conducteur souple selon l'invention.

Le dispositif de recharge de l'invention peut également satisfaire à l'une ou plusieurs des caractéristiques suivantes :

- Le matériau conducteur souple, par exemple la tresse métallique, est en cuivre ou en cuivre nickelé,
- le contact entre le collecteur d'énergie et le dispositif d'alimentation en énergie est statique,
- le dispositif d'alimentation en énergie comprend un tronçon de caténaire rigide présentant une surface de contact rigide munie d'au moins le matériau conducteur souple,
- le collecteur d'énergie est un pantographe disposé sur le toit du véhicule comportant un archet et un actionneur permettant de déplacer l'archet entre une position de captage, dans laquelle l'archet est mis en contact avec le dispositif d'alimentation en énergie portant le matériau conducteur souple (la tresse métallique) et une position d'isolation, dans laquelle l'archet est à distance du dispositif d'alimentation en énergie,
- le collecteur d'énergie est un pantographe disposé sur le toit du véhicule présentant au moins une surface de contact, munie localement du matériau conducteur souple, avec le dispositif d'alimentation en énergie,
- l'actionneur développe une force d'au moins 150 N pour mettre en contact l'archet avec la surface de contact rigide,
- le dispositif d'alimentation en énergie comprend un tronçon de rail disposé sur une voie de circulation du véhicule,
- le collecteur d'énergie est un frotteur d'alimentation fixé sous le véhicule, comportant une semelle et un actionneur permettant de déplacer la semelle entre une position de captage, dans laquelle une surface de la semelle est mise en contact avec le dispositif d'alimentation en énergie et une position d'isolation, dans laquelle la semelle est à distance du dispositif d'alimentation en énergie,
- Le matériau conducteur souple (la tresse métallique) est fixé sur la surface de la semelle du frotteur d'alimentation,
- la semelle est en matériau conducteur d'électricité et connectée électriquement avec l'équipement de stockage d'énergie disposé à bord du véhicule, le matériau conducteur souple (la tresse métallique) étant connecté avec l'équipement de stockage par l'intermédiaire de la semelle,
- l'actionneur développe une force d'au moins 300 N pour mettre la semelle en contact avec le tronçon de rail.

D'autres buts, caractéristiques et avantages de l'invention apparaîtront à la lecture de la description des modes de réalisation du dispositif, description faite à titre d'exemples non limitatifs en liaison avec les dessins dans lesquels:

- les figures 1A et 1B représentent respectivement chacun un mode de réalisation du dispositif de recharge conforme à l'invention sur une voie de circulation,
- la figure 2 représente schématiquement une variante du premier mode de réalisation du dispositif de recharge de l'invention,
- la figure 3 représente schématiquement une variante du second mode de réalisation du dispositif de recharge de l'invention,
- les figures 4A et 4B représentent d'autres variantes du second mode de réalisation du dispositif de recharge selon l'invention,

- les figures 5A,5B et 6 représentent d'autres variantes du premier mode de réalisation du dispositif de recharge de l'invention.

Pour faciliter la lecture des figures, très schématiques, seuls les éléments nécessaires à la compréhension de l'invention ont été représentés. Les mêmes éléments portent les mêmes références d'une figure à l'autre, et l'échelle entre les différents éléments représentés n'a pas été nécessairement respectée.

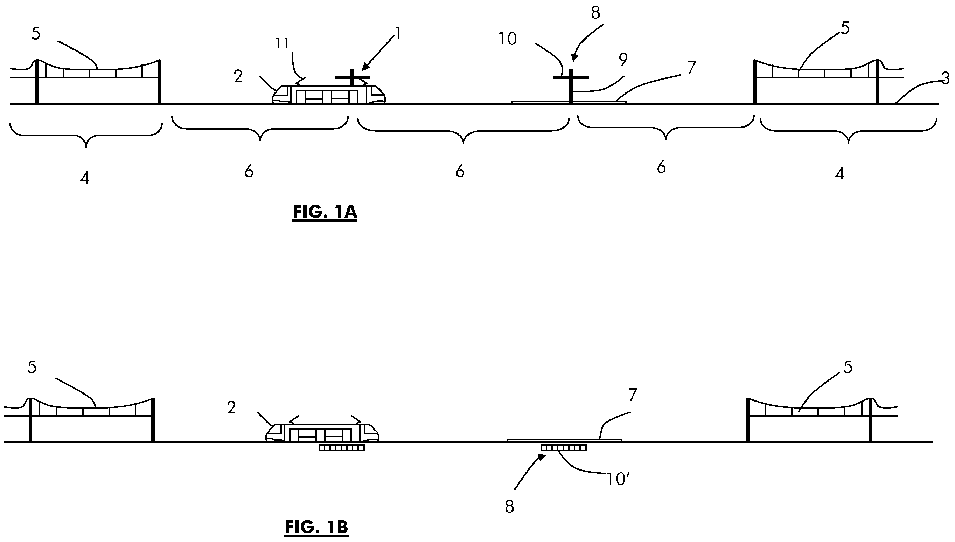

La figure 1A correspond à un premier mode de réalisation de l'invention, qui prévoit que la recharge en énergie du véhicule à l'arrêt et la recharge du véhicule roulant sur la voie se font de façon aérienne. Elle représente une vue latérale de l'implantation du dispositif de recharge 1 conforme à l'invention pour un véhicule 2 circulant sur une voie 3, comprenant des portions alimentées en énergie électrique 4 par des caténaires filaires aériennes 5 et des portions non alimentées en énergie électrique 6. A chaque station d'arrêt 7 des portions non alimentées en énergie électrique 6 est disposé un dispositif de recharge 1 selon l'invention, comprenant un dispositif d'alimentation à l'arrêt 8 en énergie extérieur au véhicule. Ici, ce dispositif d'alimentation 8 comprend un poteau 9 muni d'un tronçon de caténaire rigide 10, distribuant par exemple une tension de 750 V et un courant de 750 A.

La figure 1B est le même type de vue latérale, mais correspond à un second mode de réalisation de l'invention, qui prévoit que la recharge en énergie du véhicule roulant se fait de façon aérienne, comme précédemment, et que la recharge de véhicule à l'arrêt se fait par le sol. Ici, chaque dispositif de recharge 1 comprend un dispositif d'alimentation 8 en énergie extérieur au véhicule comprenant un tronçon de rail de recharge 10' implanté au sol, dont l'emprise est inférieure en longueur à la longueur d'un véhicule 2. Ces tronçons de rail 10' distribuent par exemple une tension de 750 V et un courant de 1500 A.

Quel que soit le dispositif d'alimentation 8 choisi, chacun est relié à une sous-station (non représentée) qui distribue l'énergie électrique depuis un réseau de distribution d'énergie électrique. Lorsque le dispositif d'alimentation 8 est un rail de recharge (figure 1B), il est également prévu un système de sécurité qui n'autorise l'alimentation en énergie du rail de recharge que lorsque celui-ci est entièrement recouvert par le véhicule. Ce système connu en soi évite qu'un piéton ne s'électrocute en marchant sur le rail de recharge.

Le dispositif de recharge 1 comprend également un collecteur d'énergie 11 disposé sur le véhicule 2, apte à entrer en contact avec un dispositif d'alimentation 8 pour permettre l'échange d'énergie. Un collecteur 11 est typiquement constitué d'un pantographe, disposé sur le toit du véhicule 2 pour un dispositif d'alimentation 8 aérien (figure 1A), ou d'un frotteur d'énergie, disposé sur un bogie ou en sous-caisse du véhicule 2 pour un dispositif d'alimentation 8 au sol (figure 1B).

Il a été constaté que l'interposition d'un matériau conducteur souple, ici mis en oeuvre sous forme d'une tresse métallique 12 plate entre les deux surfaces en contact du dispositif d'alimentation 8 et du collecteur d'énergie 11 permettait de faire chuter drastiquement la température d'échauffement de ces surfaces lorsqu'elles sont en contact statique, tout en permettant un très grand transfert d'énergie, allant jusqu'à plusieurs kWh.

Une tresse métallique plate est un raccord électrique souple conducteur d'électricité formé de fils métalliques entrecroisés à plat, utilisé classiquement pour relier électriquement différentes pièces entre elles.

Les tresses métalliques (tresses d'acier, d'aluminium, de bronze ou de cuivre) sont aussi utilisées en tant que revêtement pour protéger des fils et des câbles spéciaux contre les contraintes mécaniques ou les hautes températures. Elles sont considérées comme des armures (appelées aussi blindages) et sont appelées armures tressées. Ce sont des pièces produites en grande quantité, d'approvisionnement facile et de coût raisonnable.

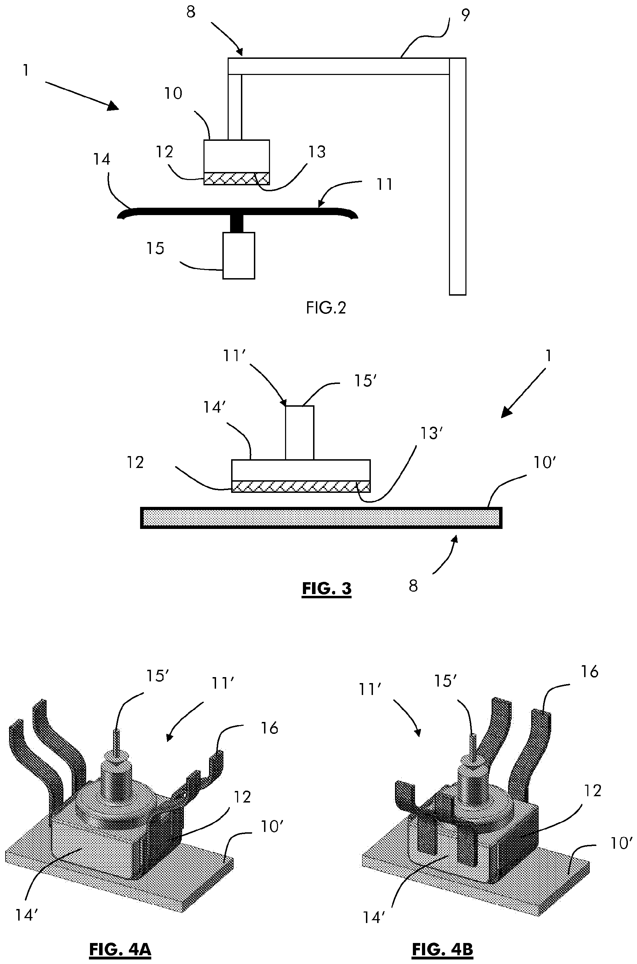

La figure 2 montre schématiquement une première variante du premier mode de réalisation du dispositif de recharge 1. Le dispositif d'alimentation 8 en énergie comprend un poteau 9 auquel est fixé un tronçon de caténaire rigide 10 présentant une surface de contact rigide 13, sur laquelle est fixée une ou plusieurs tresses métalliques 12.

La fixation de la ou des tresses peut se faire par vissage, boulonnage, collage ou toute autre méthode connue.

Le collecteur mobile 11 est un pantographe disposé sur le toit du véhicule 2, comportant un archet 14 et un actionneur 15 permettant de déplacer l'archet 14 entre une position de captage, dans laquelle l'archet 14 est mis en contact avec le tronçon de caténaire rigide 10 et une position d'isolation, dans laquelle l'archet 14 est à distance du dispositif d'alimentation 8 en énergie, replié sur le toit du véhicule 2. Ce mode de réalisation présente l'avantage d'être simple et de nécessiter peu d'équipements complémentaires pour assurer la sécurité des personnes. En effet, comme le tronçon rigide 10 est en hauteur et n'est pas accessible aux personnes, il n'y a pas de risque d'électrocution et donc pas besoin d'un équipement pour couper l'alimentation lorsque aucun véhicule ne se trouve sous le tronçon. Classiquement, l'actionneur 15 développe une force d'au moins 150 N pour mettre en contact l'archet 14 avec la tresse métallique 12.

Dans cette variante, la procédure de recharge est la suivante : lorsque le véhicule 2 s'arrête en station 7, il déploie le pantographe 11 de manière à entrer en contact avec la ou les tresses métalliques 12 fixées sur le tronçon de caténaire rigide 10 et le transfert d'énergie s'effectue. Avant la fin du temps d'arrêt en station, le pantographe 11 est replié et le véhicule 2 repart, son équipement de recharge d'énergie étant chargé.

Le calcul d'énergie transférée est effectué selon l'équation suivante :

$$E = (I \times U \times t) / 3600$$

E est l'énergie électrique en kWh,

I est l'intensité en Ampère,

U est la tension en Volts et

t est le temps de recharge en secondes.

Ainsi, pour un tronçon de caténaire délivrant du 750 A, 750 V et pour un temps de recharge de 30 s, il est possible de transférer 4,68 kWh, ce qui est nettement supérieur aux énergies des équipements actuels. Un temps d'arrêt de 15 secondes permet de transférer 2,3 kWh, donc une énergie légèrement supérieure aux puissances des équipements actuels. L'interposition d'une tresse métallique formant un contact surfacique étendu permet ainsi de transférer de grandes puissances sans qu'il soit nécessaire de modifier l'alimentation ou la puissance de l'alimentation.

Des tests de transfert d'énergie entre un pantographe et un tronçon de caténaire rigide ont été effectués par la demanderesse pour mesurer les élévations de températures ΔT obtenues, en fonction du courant d'alimentation du tronçon de caténaire rigide 10 et de la force avec laquelle le pantographe est plaqué contre ledit tronçon. Les résultats sont indiqués dans le tableau 1. Une tresse type utilisée pour les essais est en cuivre nickelé et a pour dimensions 150 mm de longueur, 50 mm de largeur et 6 mm d'épaisseur. Des embouts sertis sont disposés à chaque extrémité de la tresse pour permettre sa fixation. Ils comportent par exemple des ouvertures oblongues à travers lesquelles sont disposées des vis.

Tableau 1

| N° Test | Courant (A) | Force (N) | L1T après 30s (°C) | Remarques |
|---------|-------------|-----------|--------------------|-----------|
| 1 | 1500 | 1000 | 73,4 | |
| 2 | 1500 | 500 | 102,8 | |
| 3 | 1500 | 300 | 128,6 | |
| 4 | 1500 | 500 | 194,3 | Bois ajouté entre la tresse et la portion de caténaire rigide |
| 5 | 750 | 1000 | 54,8 | |
| 6 | 750 | 500 | 66,1 | |
| 7 | 750 | 300 | 68,8 | |
| 8 | 750 | 150 | 86,2 | |

Ces essais montrent que l'élévation de température de la tresse métallique 12 est d'au plus 130°C pour un courant de 1500 A et d'au plus 87°C pour un courant de 750 A, pour des forces variant entre 150 et 1000 N. Ces températures de fonctionnement ne risquent pas de détériorer la tresse 12, le pantographe ou le tronçon de caténaire rigide 10.

La figure 3 montre une variante du second mode de réalisation du dispositif de recharge 1. Le dispositif d'alimentation 8 en énergie comprend un tronçon de rail de recharge 10' disposé au sol. Le collecteur mobile 11 est un frotteur d'énergie 11', disposé sur un bogie ou en sous-caisse du véhicule 2, présentant une surface de contact rigide 13' sur laquelle est fixée une ou plusieurs tresses métalliques 12. Le frotteur 11' comprend une semelle 14' et un actionneur 15' permettant de déplacer le frotteur 11' entre une position de captage, dans laquelle le frotteur est mis en contact avec le tronçon de rail de recharge 10' et une position d'isolation, dans laquelle le frotteur 11' est à distance du dispositif d'alimentation 8, replié sous la caisse du véhicule 2. La ou les tresses métalliques 12 sont dans ce second mode disposées sur la semelle 14' du frotteur 11' et non sur la surface de contact rigide du tronçon de rail 10' car, dans cette dernière disposition, la ou les tresses pourraient être détériorées par le passage des piétons ou des véhicules, voire volées.

Classiquement, l'actionneur 15' développe une force d'au moins 300 N pour mettre en contact le frotteur 11' avec la surface de contact du rail de recharge 10'.

La figure 4A montre une autre variante du second mode de réalisation de l'invention, avec un assemblage différent de la tresse 12 au frotteur d'énergie 11'. La tresse métallique 12 est fixée à la face de la semelle 14, du frotteur destinée à entrer en contact avec le rail de recharge 10', l'actionneur 15' étant disposé sur la face opposée. La tresse métallique 12 est connectée électriquement via un convertisseur DC/DC avec l'équipement de stockage d'énergie disposé à bord du véhicule 2 au moyen de câbles d'alimentation 16. Lorsque le frotteur 11' est mis en contact avec le rail de recharge 10', l'énergie transite donc depuis la surface de contact du rail de recharge 10' à la tresse métallique 12 puis aux câbles d'alimentation 16 pour atteindre le convertisseur DC/DC de l'équipement de stockage d'énergie.

Dans une autre variante représentée en figure 4B, la tresse métallique 12 est aussi fixée à la face de la semelle 14' du frotteur 11' destinée à entrer en contact avec le rail de recharge 10', l'actionneur 15' étant disposé sur la face opposée. Ici, la semelle 14' est en matériau conducteur d'électricité (par exemple en fer) et est connectée électriquement via un convertisseur DC/DC avec l'équipement de stockage d'énergie disposé à bord du véhicule 2 aux moyens de câbles d'alimentation 16. La tresse métallique 12 est ainsi connectée avec le convertisseur DC/DC de l'équipement de stockage par l'intermédiaire de la semelle 14'. Lorsque le frotteur 11' est mis en contact avec le rail de recharge 10', l'énergie transite donc depuis la surface de contact du rail de recharge 10' à la tresse métallique 12, puis à la semelle 14', et enfin aux câbles d'alimentation 16 pour atteindre le convertisseur DC/DC de l'équipement de stockage d'énergie.

Ainsi, pour un tronçon de rail de recharge délivrant du 1500 A, 750 V et pour un temps de recharge de 30 secondes, il est possible de transférer 9,3 kWh, ce qui est très nettement supérieur aux énergies des équipements actuels. Un temps d'arrêt de 15 secondes permet de transférer 4,7 kWh, donc encore une énergie très supérieure aux énergies des équipements actuels.

Des tests de transfert d'énergie entre un frotteur et un tronçon de rail ont été effectués par la demanderesse pour mesurer les élévations de températures $\Delta T$ obtenues, en fonction du courant d'alimentation du tronçon de rail de recharge 10' et de la force avec laquelle le frotteur 11' est plaqué contre le rail de recharge. Dans ces essais, la semelle 14' est en laiton et la tresse métallique 12 est en cuivre nickelé.

Le tableau 2 montre les températures de la tresse métallique atteintes lorsque le courant ne passe pas par la semelle 14' du frotteur 11', mais exclusivement par la tresse métallique 12 (variante de la figure 4A).

Tableau 2

| N° Test | Courant (A) | Force (N) | L1T après 30s (°C) | L1T Max (°C) | Remarques |
|---|---|---|---|---|---|
| 1 | 1000 | 1000 | 8,0 | 8,2 | |
| 2 | 2000 | 1000 | 30,8 | 31,2 | |
| 3 | 4000 | 1000 | 103,9 | | |
| 4 | 1500 | 2000 | 5,0 | 5,1 | |
| 5 | 1500 | 2000 | 5,2 | 5,6 | |
| 6 | 1500 | 1000 | 10,8 | - | |
| 7 | 1500 | 750 | 12,8 | - | |
| 8 | 1500 | 500 | 17,3 | - | |
| 9 | 1500 | 300 | 32,0 | - | |
| 10 | 1500 | 500 | 8,2 | 8,5 | Avec du sable - Quelques brins détériorés |
| 11 | 1500 | 500 | 48,4 | - | Avec du sable, pré-tension de 2000 N - Quelques brins soudés |

Les essais montrent que l'élévation de température de la tresse reste inférieure ou égale à 32°C lorsque le courant est inférieur à 2000 A et quand la force appliquée varie entre 300 et 1000 N. La température du rail de recharge 10' est équivalente à celle de la tresse 12, puisque les deux sont en contact.

Le tableau 3 montre les températures de la tresse métallique atteintes lorsque le courant passe par la semelle 14' du frotteur 11' (variante de la figure 4B).

Tableau 3

| N° Test | Courant (A) | Force (N) | L1T après 30s (°C) | L1T Max (°C) | Remarques |
|---|---|---|---|---|---|
| 1 | 1000 | 300 | 13,8 | 13,9 | |
| 2 | 1000 | 500 | 27,9 | - | |
| 3 | 1000 | 1000 | 32,7 | 37,7 | |
| 4 | 1000 | 2000 | 11,6 | 11,8 | Quelques brins détériorés. |

(suite)

| N° Test | Courant (A) | Force (N) | L1T après 30s (°C) | L1T Max (°C) | Remarques |
|---------|-------------|-----------|--------------------|--------------|-----------|
| 1 | 1000 | 300 | 13,8 | 13,9 | |
| 5 | 2000 | 300 | 22,4 | - | |
| 6 | 3000 | 300 | 58,2 | - | 250 N à la fin du test |
| 7 | 4000 | 300 | 70,5 | - | 200 N à la fin du test |
| 8 | 4000 | 500 | 63,3 | - | 600 N à la fin du test |
| 9 | 4000 | 1000 | 62,1 | - | 1050 N à la fin du test |
| 10 | 4000 | 1000 | 81,8 | - | |

Les essais montrent que l'élévation de température de la tresse reste inférieure ou égales à 33°C lorsque le courant est inférieur à 2000A et quand la force appliquée varie entre 300 et 2000 N. Lorsque le courant est plus élevé, l'élévation de température varie entre 58 et 82°C, selon la force appliquée.

Cette solution est plutôt préconisée pour des transferts d'énergie dont l'intensité est inférieure à 2000 A.

La température atteinte est moins élevée lorsque le transfert d'énergie est effectué entre un frotteur et un rail de recharge plutôt que lorsque le transfert d'énergie est effectué entre un pantographe et une caténaire rigide, car la force avec laquelle le frotteur est appliqué sur le rail de recharge est plus élevée. Le contact obtenu est ainsi meilleur et une plus grande surface est utilisée pour le transfert d'énergie.

Ces essais montrent que l'interposition d'une tresse métallique entre le collecteur d'énergie 11, 11' et le dispositif d'alimentation en énergie 8 permet de diminuer très fortement la température de ces pièces en contact et évite ainsi leur détérioration. Ceci est obtenu par le fait que toute la surface de la tresse 12 forme un contact permettant le transfert d'énergie : il y a ainsi moins de courant qui passe par unité surfacique et donc moins d'échauffement. Il devient alors possible de transférer de très grandes quantités d'énergie en peu de temps par rapport aux dispositifs de l'art antérieur où le contact entre le collecteur d'énergie et le dispositif d'alimentation se fait de façon ponctuelle.

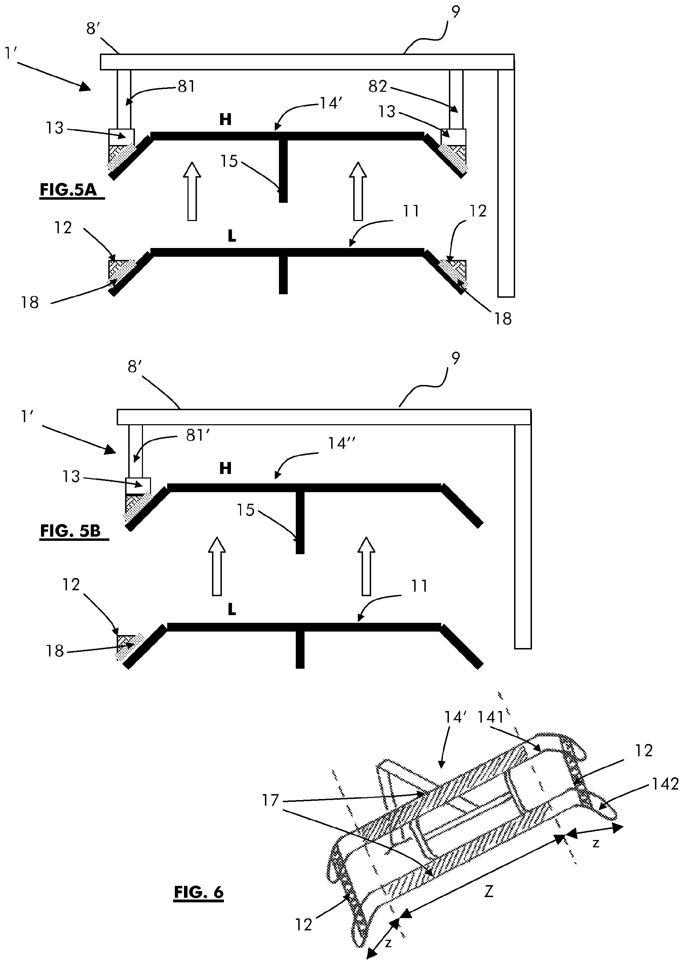

Les figures 5A,5B et 6 se rapportent à deux autres variantes du premier mode de réalisation de l'invention, où c'est le pantographe, le collecteur d'énergie, qui comporte le matériau fibreux de l'invention.

Dans l'exemple représenté aux figures 5A et 6, le pantographe, de manière connue, comporte un archet 14' muni de deux bandes de frottement transversales 141,142 pourvus chacun d'une piste de captage d'énergie 17 destinée à l'alimentation du véhicule roulant. Usuellement, et comme représenté en figure 6, ces pistes de captage sont des revêtements de carbone déposés sur la face tournée vers le haut des bandes de frottement 141 et 142 de l'archet, dans la zone centrale et plane Z desdites bandes correspondant à la zone apte à être balayée, en fonctionnement normal, par la caténaire filaire 5 quand le véhicule roule.

Selon l'invention, pour la recharge à l'arrêt, la surface de contact avec le tronçon de caténaire rigide est également disposée sur l'archet 14, mais à une hauteur différente des pistes de captage 17. Concrètement, les surfaces de contact sont définies par un support 18 auquel est solidarisé le matériau fibreux métallique souple, du type tresse métallique 12 comme dans les exemples précédents, et qui relie les deux bandes 141,142 de l'archet 14' au niveau des zones latérales z des bandes, au-delà, latéralement, de la zone Z dédiée à l'alimentation du véhicule roulant. Ces zones latérales z présentent une courbure vers le bas et sont désignées communément sous le terme de « cornes » : elles prolongent latéralement les bandes de l'archet, mais ne sont pas destinées, en fonctionnement normal, à entrer en contact avec la caténaire filaire. Les supports 18 peuvent être fixés aux bandes 141,142 de l'archet par tout moyen, notamment mécaniques, connus. On choisit ici un assemblage par soudure. Les supports ont ici sensiblement une forme de barreau à section sensiblement rectangulaire, mais peuvent adopter d'autres formes de section et une certaine courbure.

Chacune des tresses 12 est elle-même assemblée à son support 18 par tout moyen mécanique ou adhésif (collage, rivetage, vissage ...), et recouvre au moins une portion de sa face supérieure. La tresse peut également venir gainer entièrement le support 18, en étant par exemple tissée sous forme tubulaire, et rester en place autour de celui-ci par simple effet d'élasticité.

A l'arrêt, l'archet 14'est levé de sa position basse (L), inactive, vers une position haute (H) par un actionneur 15, de façon à ce que les tresses 12 disposées sur les cornes de l'archet 14' soient en contact avec deux tronçons de caténaires rigides 13' disposées à l'aplomb de celles-ci, à l'extrémité de deux montants 81,82 du dispositif d'alimentation 8. On obtient ainsi deux zones de transfert d'énergie au niveau de chacune des tresses 12, disposées sensiblement symétriquement de part et d'autre de l'axe longitudinal du véhicule (et de la voie).

A noter que, de façon connue, les bandes 141,142 de l'archet sont généralement métalliques, donc conducteurs.

Le chemin électrique lors du transfert d'énergie à l'arrêt est donc : depuis les montants 81,82 du dispositif d'alimentation 8 jusqu'aux tronçons de caténaire rigide 13, à travers les tresses 13 et leurs supports 18 (également conducteurs car métalliques) jusqu'aux bandes 114,142 de l'archet, lui-même connecté à un câble d'alimentation (non représenté) du véhicule. Le fait que les tresses 12 soient disposées à une hauteur inférieure à celle des bandes de captage 17 évite toute interaction desdites tresses avec des caténaires filaires, notamment lors des aiguillages, interaction qui risquerait de provoquer leur arrachement de l'archet. Il s'est avéré que la distance entre bandes 141,142 était suffisante pour que la tresse puisse offrir une surface de transfert suffisante, par exemple de l'ordre de 10 à 100 cm$^2$, avec une largeur de tresse raisonnable (quelques centimètres de large). Dans l'exemple représenté, la tresse 12 couvre la totalité de la surface supérieure du support 18. On peut également prévoir que la tresse n'en recouvre qu'une portion (latéralement ou longitudinalement).

La figure 5B propose un exemple qui diffère de celui de la figure 5A en ce qu'il n'y a qu'un support 18 muni de la tresse 12 disposé sur la corne de l'une des bandes 141 seulement de l'archet 14. Corrélativement, on ne prévoit également qu'un seul montant 81 connecté à un seul tronçon de caténaire rigide 13 au dispositif d'alimentation disposé à l'aplomb de la tresse unique 12.Le principe de fonctionnement à l'arrêt est, sinon, identique à celui de l'exemple de la figure 5A. Il n'y a donc ici qu'une seule zone de transfert d'énergie. Cette configuration est plus simple à réaliser, plus économe en matériaux que celle selon la figure 5A. Par contre la configuration selon la figure 5A est préférable sur le plan mécanique (meilleure répartition des efforts mécaniques de par la symétrie dans les zones d'appuis entre le dispositif d'alimentation en énergie et le pantographe) et permet des transferts d'énergie très importants, du fait du doublement de la surface de transfert possible.

Les variantes des figures 5A,5B et 6 exploitent ainsi la zone des cornes de l'archet pour assurer une nouvelle fonction, permettant ainsi de proposer un pantographe bi-mode, apte à être alimenté en énergie à la fois quand le véhicule roule et quand il est à l'arrêt, sans compliquer la cinématique du pantographe (il s'agit toujours des mouvements connus de levage et pliage de l'archet), ni requérir des composants additionnels complexes. L'invention s'étend également à de tels pantographes bi-mode, qui présentent des surfaces de contact pour transfert d'énergie à l'arrêt qui sont disposées sur une ou chaque corne et qui sont munies d'un matériau différent du matériau fibreux métallique décrit plus haut du type tresse, mais qui possède des capacités analogues.

Bien entendu, l'invention, dans sa définition générale, n'est nullement limitée aux modes de réalisation décrits et illustrés qui n'ont été donnés qu'à titre d'exemple. Ainsi, une ou plusieurs tresses métalliques 12 peuvent être utilisées, côte à côte, en file ou selon un autre schéma en deux dimensions permettant de couvrir la surface de contact adéquate. Une tresse métallique plus grande ou plus longue que celle mentionnée est bien sûr utilisable, en fonction de la surface de contact au travers de laquelle l'énergie doit être transférée. La tresse peut être en cuivre, en cuivre nickelé. Elle peut également comprendre un feuillard en cuivre dans son épaisseur.

On peut également envisager de disposer une tresse sur le collecteur d'énergie et sur le dispositif d'alimentation, le contact se faisant alors entre les deux tresses.

A noter que l'archet tel illustré en figure 6 présente deux bandes de frottement transversales - qui sont les composants du pantographe munis des pistes de captage pour l'alimentation roulante - mais que l'invention s'applique de façon analogue à des archets munis d'un nombre différent de bandes de frottement, par exemple une seule bande de frottement ou trois bandes de frottement.

**Revendications**

1. Dispositif de recharge en énergie (1) pour un équipement de stockage d'énergie embarqué à bord d'un véhicule (2), comprenant au moins un dispositif d'alimentation en énergie (8) extérieur au véhicule (2), au moins un collecteur d'énergie (11, 11') apte à être fixé sur le véhicule, et au moins un matériau conducteur souple (12), **caractérisé en ce que** :

   - *le dispositif d'alimentation en énergie (8) et le collecteur d'énergie (11, 11') étant du type présentant chacun au moins une surface* apte à être mise en contact l'une avec l'autre en l'absence du matériau conducteur souple (12),
   - *le matériau conducteur souple* (12) est interposé entre les deux surfaces pour former un contact surfacique permettant le transfert d'énergie entre le collecteur d'énergie (11, 11') et le dispositif d'alimentation en énergie (8) par la surface dudit matériau conducteur souple (12).

2. Dispositif de recharge en énergie (1) selon la revendication précédente, **caractérisé en ce que** le matériau conducteur souple (12) est métallique.

3. Dispositif de recharge en énergie (1) selon l'une des revendications précédentes, **caractérisé en ce que** le matériau conducteur souple (12) est un matériau fibreux, notamment tissé ou non tissé, ou un matériau sous forme de mousse.

4. Dispositif de recharge en énergie (1) selon la revendication précédente, **caractérisé en ce que** tout ou partie du matériau conducteur souple (12) est solidarisé au dispositif d'alimentation en énergie (8).

5. Dispositif de recharge en énergie (1) selon l'une des revendications précédentes, **caractérisé en ce que** tout ou partie du matériau conducteur souple (12) est solidarisé au collecteur d'énergie (11,11').

6. Dispositif de recharge en énergie (1) selon l'une des revendications précédentes, **caractérisé en ce que** ledit matériau conducteur souple (12) comprend au moins une tresse métallique, notamment de type tresse de blindage ou tresse de retour de courant.

7. Dispositif de recharge en énergie (1) selon l'une des revendications précédentes, **caractérisé en ce que** le contact entre le collecteur d'énergie (11, 11') et le dispositif d'alimentation en énergie (8) est statique.

8. Dispositif de recharge en énergie (1) selon l'une des revendications précédentes, **caractérisé en ce que** le dispositif d'alimentation en énergie (8) comprend un tronçon de caténaire rigide (10) présentant une surface de contact (13) munie du matériau conducteur souple (12), notamment d'au moins une tresse métallique.

9. Dispositif de recharge en énergie (1) selon la revendication précédente, **caractérisé en ce que** le collecteur d'énergie (11) est un pantographe disposé sur le toit du véhicule (2) comportant un archet (14) et un actionneur (15) permettant de déplacer l'archet (14)

    - entre une position de captage, dans laquelle l'archet (14) est mis en contact avec le dispositif d'alimentation en énergie (8) portant le matériau conducteur souple (12), et
    - une position d'isolation, dans laquelle l'archet (14) est à distance du dispositif d'alimentation en énergie (8).

10. Dispositif de recharge en énergie (1) selon l'une des revendications précédentes, **caractérisé en ce que** le collecteur d'énergie (11) est un pantographe disposé sur le toit du véhicule (2) présentant au moins une surface de contact, munie localement du matériau conducteur souple (12), avec le dispositif d'alimentation en énergie (8).

11. Dispositif de recharge en énergie (1) selon la revendication précédente, **caractérisé en ce que** le pantographe (11) comprend un archet (14) muni de deux bandes transversales (141,142) pourvus chacun d'une piste (17) de captage d'énergie destinée à l'alimentation du véhicule roulant, **en ce que** la surface de contact munie localement du matériau conducteur souple (12) est destinée à l'alimentation du véhicule à l'arrêt, et **en ce que** ladite surface de contact est également disposée sur ledit archet (14), à une hauteur différente desdites pistes de captage.

12. Dispositif de recharge d'énergie (1) selon la revendication précédente, **caractérisé en ce que** ladite ou chaque surface de contact est définie par au moins un support (18) auquel est solidarisé le matériau conducteur souple (12), ledit support reliant les deux bandes (141,142) de l'archet (14).

13. Dispositif de recharge d'énergie (1) selon la revendication précédente, **caractérisé en ce que** les bandes transversales(141,142) de l'archet (14) comprennent une zone plane centrale (Z) et des zones latérales (z) incurvées, notamment vers le bas, le ou chaque support (18) reliant les deux bandes de l'archet au niveau desdites zones latérales.

14. Dispositif de recharge en énergie (1) selon l'une des revendications 1 à 5, **caractérisé en ce que** le dispositif d'alimentation en énergie (8) comprend un tronçon de rail (10') disposé sur une voie de circulation du véhicule (2).

15. Dispositif de recharge en énergie (1) selon la revendication précédente, **caractérisé en ce que** le collecteur d'énergie est un frotteur d'alimentation (11') fixé sous le véhicule, comportant une semelle (14') et un actionneur (15') permettant de déplacer la semelle (14') entre une position de captage, dans laquelle une surface (13') de la semelle (14') est mise en contact avec le dispositif d'alimentation en énergie (8) et une position d'isolation, dans laquelle la semelle (14') est à distance du dispositif d'alimentation en énergie (8).

16. Dispositif de recharge en énergie (1) selon la revendication précédente, **caractérisé en ce que** le matériau conducteur souple, notamment la tresse métallique (12), est fixé sur la surface (13') de la semelle (14') du frotteur d'alimentation (11').

**17.** Dispositif de recharge en énergie selon la revendication 14, **caractérisé en ce que** la semelle (14') est en matériau conducteur d'électricité et connectée électriquement avec l'équipement de stockage d'énergie disposé à bord du véhicule (2), le matériau conducteur souple, notamment la tresse métallique, (12) étant connectée avec l'équipement de stockage par l'intermédiaire de la semelle (14').

**Patentansprüche**

**1.** Energieaufladevorrichtung (1) für eine Energiespeicherausrüstung, welche an Bord eines Fahrzeugs (2) mitgenommen wird, aufweisend zumindest eine Energieversorgungsvorrichtung (8) außen am Fahrzeug (2), zumindest eine Energiesammelvorrichtung (11, 11'), welche eingerichtet ist, um an dem Fahrzeug (2) fixiert zu sein, und zumindest ein flexibles, leitfähiges Material (12), **dadurch gekennzeichnet, dass**

- die Energieversorgungsvorrichtung (8) und die Energiesammelvorrichtung (11, 11') vom Typ sind, welcher jeweils zumindest eine Fläche aufweist, die eingerichtet sind, um unter Abwesenheit des flexiblen, leitfähigen Materials (12) miteinander in Kontakt zu stehen,
- das flexible, leitfähige Material (12) zwischen den beiden Flächen angeordnet ist, um einen Flächenkontakt zu bilden, welcher den Energietransfer zwischen der Energiesammelvorrichtung (11, 11') und der Energieversorgungsvorrichtung (8) über die Fläche des flexiblen, leitfähigen Materials (12) erlaubt.

**2.** Energieaufladevorrichtung (1) gemäß dem vorhergehenden Anspruch, **dadurch gekennzeichnet, dass** das flexible, leitfähige Material (12) metallisch ist.

**3.** Energieaufladevorrichtung (1) gemäß einem der vorhergehenden Ansprüche, **dadurch gekennzeichnet, dass** das flexible, leitfähige Material (12) ein Fasermaterial, insbesondere gewebt oder nicht gewebt, oder ein Material in Form eines Schaums ist.

**4.** Energieaufladevorrichtung (1) gemäß dem vorhergehenden Anspruch, **dadurch gekennzeichnet, dass** das gesamte oder ein Teil des flexiblen, leitfähigen Materials (12) mit der Energieversorgungsvorrichtung (8) verbunden ist.

**5.** Energieaufladevorrichtung (1) gemäß einem der vorhergehenden Ansprüche, **dadurch gekennzeichnet, dass** das gesamte oder ein Teil des flexiblen, leitfähigen Materials (12) mit der Energiesammelvorrichtung (11, 11') verbunden ist.

**6.** Energieaufladevorrichtung (1) gemäß einem der vorhergehenden Ansprüche, **dadurch gekennzeichnet, dass** das flexible, leitfähige Material (12) zumindest ein Metallgeflecht aufweist, insbesondere vom Typ eines Schirmgeflechts oder eines Rückstromgeflechts.

**7.** Energieaufladevorrichtung (1) gemäß einem der vorhergehenden Ansprüche, **dadurch gekennzeichnet, dass** der Kontakt zwischen der Energiesammelvorrichtung (11, 11') und der Energieversorgungsvorrichtung (8) statisch ist.

**8.** Energieaufladevorrichtung (1) gemäß einem der vorhergehenden Ansprüche, **dadurch gekennzeichnet, dass** die Energieversorgungsvorrichtung (8) einen Abschnitt einer steifen Oberleitung (10) aufweist, welche eine Kontaktfläche (13) hat, die mit dem flexiblen, leitfähigen Material (12) versehen ist, insbesondere einem Metallgeflecht.

**9.** Energieaufladevorrichtung (1) gemäß dem vorhergehenden Anspruch, **dadurch gekennzeichnet, dass** die Energiesammelvorrichtung (11) ein Pantograf ist, der auf dem Dach des Fahrzeugs (2) angeordnet ist, aufweisend einen Bogen (14) und einen Aktuator (15), welcher es erlaubt, den Bogen (14) zu verschieben zwischen

- einer Entnahmeposition, in welcher sich der Bogen (14) mit der Energieversorgungsvorrichtung (8), welche das flexible, leitfähige Material (12) trägt, in Kontakt befindet und
- einer Isolationsposition, in welcher sich der Bogen (14) mit einer Distanz zur Energieversorgungsvorrichtung (8) befindet.

**10.** Energieaufladevorrichtung (1) gemäß einem der vorhergehenden Ansprüche, **dadurch gekennzeichnet, dass** die Energiesammelvorrichtung (11) ein Pantograf ist, der auf dem Dach des Fahrzeugs (2) angeordnet ist, aufweisend zumindest eine Kontaktfläche, welche lokal mit dem flexiblen, leitfähigen Material (12) versehen ist, mit der Energieversorgungsvorrichtung (8).

11. Energieaufladevorrichtung (1) gemäß dem vorhergehenden Anspruch, **dadurch gekennzeichnet, dass** der Pantograf (11) einen Bogen (14) aufweist, der mit zwei Querbänder (141, 142) versehen ist, die jede von einer Energieentnahmebahn (17) besetzen, die zum Versorgen des rollenden Fahrzeugs geeignet sind, und dass die Kontaktfläche, welche lokal mit dem flexiblen, leitfähigen Material (12) versehen ist, zum Versorgen des Fahrzeugs beim Halten geeignet ist, und dass die Kontaktfläche auf dem Bogen (14) ferner auf einer Höhe angeordnet ist, welche von den Entnahmebahnen verschieden ist.

12. Energieaufladevorrichtung (1) gemäß dem vorhergehenden Anspruch, **dadurch gekennzeichnet, dass** die oder jede Kontaktfläche durch zumindest eine Abstützung (18) definiert ist, mit der das flexible, leitfähige Material (12) verbunden ist, wobei die Abstützung (18) die zwei Bänder (141, 142) des Bogens (14) verbindet.

13. Energieaufladevorrichtung (1) gemäß dem vorhergehenden Anspruch, **dadurch gekennzeichnet, dass** die zwei Querbänder (141, 142) des Bogens (14) einen flachen Zentralbereich (Z) und gebogene Lateralbereiche (z) aufweisen, insbesondere nach unten, wobei die oder jede Abstützung (18) die zwei Bänder des Bogens auf einer Ebene der Lateralbereiche verbinden.

14. Energieaufladevorrichtung (1) gemäß einem der Ansprüche 1 bis 5, **dadurch gekennzeichnet, dass** die Energieversorgungsvorrichtung (8) einen Schienenabschnitt (10) aufweist, welcher auf einer Fahrspur des Fahrzeugs (2) angeordnet ist.

15. Energieaufladevorrichtung (1) gemäß dem vorhergehenden Anspruch, **dadurch gekennzeichnet, dass** die Energiesammelvorrichtung ein Versorgungsgleitstück (11') ist, welches unter dem Fahrzeug fixiert ist, aufweisend eine Sohle (14') und einen Aktuator (15'), welcher ein Verschieben der Sohle (14') zwischen einer Entnahmeposition, in welcher sich eine Fläche (13') der Sohle (14') mit der Energieversorgungsvorrichtung (8) in Kontakt befindet, und einer Isolationsposition erlaubt, in welcher sich die Sohle (14') mit einer Distanz zur Energieversorgungsvorrichtung (8) befindet.

16. Energieaufladevorrichtung (1) gemäß dem vorhergehenden Anspruch, **dadurch gekennzeichnet, dass** das flexible, leitfähige Material, insbesondere das Metallgeflecht (12), auf der Fläche (13') der Sohle (14') des Versorgungsgleitstücks (11') fixiert ist.

17. Energieaufladevorrichtung (1) gemäß dem Anspruch 14, **dadurch gekennzeichnet, dass** die Sohle (14') aus einem elektrischleitfähigen Material ist und mit der Energiespeicherausrüstung elektrisch verbunden ist, die an Bord des Fahrzeugs (2) angeordnet ist, wobei das flexible, leitfähige Material, insbesondere das Metallgeflecht (12), mit der Energiespeicherausrüstung durch die dazwischenliegende Sohle (14') verbunden ist.

## Claims

1. Energy charging device (1) for energy storage equipment on board a vehicle (2), comprising at least one energy supply device (8) outside the vehicle (2), at least one energy collector (11, 11') designed to be fixed on the vehicle, and at least one flexible conductive material (12), **characterized in that**:

   - the energy supply device (8) and the energy collector (11, 11') are of the type wherein each has at least one surface capable of being brought into contact with each other in the absence of the flexible conductive material (12),
   - the flexible conductive material (12) is interposed between the two surfaces to form a surface contact allowing the transfer of energy between the energy collector (11, 11') and the energy supply device (8) through the surface of the flexible conductive material (12).

2. Energy recharging device (1) according to the preceding claim, **characterized in that** the flexible conductive material (12) is metallic.

3. Energy recharging device (1) according to one of the preceding claims, **characterized in that** the flexible conductive material (12) is a fibrous material, in particular woven or non-woven, or a material in the form of foam.

4. Energy recharging device (1) according to the preceding claim, **characterized in that** all or part of the flexible conductive material (12) is secured to the energy supply device (8).

5. Energy recharging device (1) according to one of the preceding claims, **characterized in that** all or part of the flexible conductive material (12) is secured to the energy collector (11,11').

6. Energy recharging device (1) according to one of the preceding claims, **characterized in that** the flexible conductive material (12) comprises at least one metal braid, especially of the shielded braid or current feedback braid type.

7. Energy recharging device (1) according to one of the preceding claims, **characterized in that** the contact between the energy collector (11, 11') and the energy supply device (8) is static.

8. Energy recharging device (1) according to one of the preceding claims, **characterized in that** the energy supply device (8) comprises a rigid catenary section (10) having a contact surface (13) provided with flexible conductive material (12), in particular at least one metal braid.

9. Energy recharging device (1) according to the preceding claim, **characterized in that** the energy collector (11) is a pantograph disposed on the roof of the vehicle (2) comprising a bow (14) and an actuator (15) allowing the bow (14) to be moved:

   - between a sensing position, in which the bow (14) is brought into contact with the energy supply device (8) carrying the flexible conductive material (12), and
   - an isolation position, in which the bow (14) is remote from the energy supply device (8).

10. Energy recharging device (1) according to one of the preceding claims, **characterized in that** the energy collector (11) is a pantograph arranged on the roof of the vehicle (2) having at least one contact surface, provided locally with the flexible conductive material (12) of the energy supply device (8).

11. Energy recharging device (1) according to the preceding claim, **characterized in that** the pantograph (11) comprises a bow (14) provided with two transverse strips (141, 142), wherein each is provided with a track (17) for sensing energy to power the traveling vehicle, wherein the contact surface is locally provided with the flexible conductive material (12) to power the vehicle at a standstill, and wherein the contact surface is also arranged on the bow (14) at a different height of the sensing tracks.

12. Energy recharging device (1) according to the preceding claim, **characterized in that** the, or each, contact surface is defined by at least one support (18) which is secured to the flexible conductive material (12), wherein the support connects the two strips (141,142) of the bow (14).

13. Energy recharging device (1) according to the preceding claim, **characterized in that** the transverse strips (141, 142) of the bow (14) comprise a central planar zone (Z) and lateral zones (z), in particular curved downwards, wherein the, or each, support (18) connects the two strips of the bow at the lateral zones.

14. Energy recharging device (1) according to one of claims 1 to 5, **characterized in that** the energy supply device (8) comprises a rail section (10') arranged on a traffic lane of the vehicle (2).

15. Energy recharging device (1) according to the preceding claim, **characterized in that** the energy collector is a supply shoe (11') fixed under the vehicle, comprising a sole (14') and an actuator (15') to move the sole (14') between a sensing position, in which a surface (13') of the sole (14') is brought into contact with the energy recharging device (8) and an insulation position, in which the sole (14') is remote from the energy recharging device (8).

16. Energy recharging device (1) according to the preceding claim, **characterized in that** the flexible conductive material, in particular the metal braid (12), is fixed on the surface (13') of the sole (14') of the supply shoe (11').

17. Energy recharging device according to claim 14, **characterized in that** the sole (14') is made of electrically-conductive material and is electrically connected with the energy storage equipment arranged on board the vehicle (2), wherein the flexible conductive material, in particular the metal braid (12) is connected with the storage equipment via the sole (14').

**FIG. 1A**

**FIG. 1B**

EP 2 345 554 B1

FIG.2

**FIG. 3**

**FIG. 4A**

**FIG. 4B**

**FIG.5A**

**FIG. 5B**

**FIG. 6**

**RÉFÉRENCES CITÉES DANS LA DESCRIPTION**

**Documents brevets cités dans la description**

- FR 2910391
- FR 2794695

- US 4139071 A